# EUROPÄISCHE PATENTSCHRIFT

(11) **EP 1 862 513 B1**
(45) Veröffentlichungstag und Bekanntmachung des Hinweises auf die Patenterteilung: **21.07.2010**
(21) Anmeldenummer: 07405152.5
(22) Anmeldetag: 25.05.2007
(51) Int. Cl.: C09D 11/00, B41J 11/00

(54) **Tinte zum Bedrucken von Substraten mit nicht saugfähiger Oberfläche**
Ink for printing substrates with a non-porous surface
Encre destinée à l'impression de substrats à surface non absorbante

(30) Priorität: 01.06.2006 CH 884062006
(43) Veröffentlichungstag der Anmeldung: 05.12.2007
(73) Patentinhaber: Basler lacke ag, 5033 Buchs AG (CH)
(72) Erfinder: Farkas, Rosalie, 8623 Wetzikon (CH)
(74) Vertreter: Wiedmer, Edwin

(56) Entgegenhaltungen:
- EP-A- 1 522 561
- EP-A1- 1 036 831
- EP-A2- 0 936 080
- US-A- 4 340 893
- US-A- 5 085 698
- US-A- 5 640 187

## Beschreibung

### Technisches Gebiet der Erfindung

Die vorliegende Erfindung betrifft eine Tinte nach dem Oberbegriff des Anspruchs 1. Im Rahmen der Erfindung liegt auch ein Tintensatz.

### Stand der Technik

Tinten für das Bedrucken von nicht saugfähigen Oberflächen mittels Tintenstrahldrucktechnologie sind prinzipiell bekannt. Im Direktdruckverfahren werden drei verschiedene Arten von Tinten auf nicht saugfähigen Oberflächen eingesetzt: Tinten auf Lösungsmittelbasis, UV härtende Tinten und wässrige Tinten, deren Trocknung während des Bedruckens jedoch mit Heizplatten und/oder Infrarotheizung ausgerüstete Drucker erfordert. Des Weiteren sind indirekte Druckverfahren als Sublimationsdruck oder Thermotransferdruck bekannt, bei dem die Tinte in einem ersten Schritt mittels Tintenstrahldrucktechnologie auf ein Transferpapier übergetragen wird.

Spezialtinten auf Lösungsmittelbasis, so genannte Solvent-, ECO-Solvent- oder Light-Solventtinten, riechen stark und unangenehm, sind gesundheitsschädlich und leicht entflammbar. Bei der Verwendung derartiger Tinten müssen Drucker zum Schutz der Umwelt und des Bedienpersonals mit Absaugvorrichtungen ausgerüstet sein. Die Haftung des Farbmittels auf dem zu bedruckenden Untergrund wird durch Anlösen des Substrates erreicht. Werden die zu bedruckenden Substratoberflächen nicht von der Tinte angelöst, ist die Haftung der Farbmittel für anspruchsvolle Industrieanwendung ungenügend. Lösungsmittelbeständige Substrate lassen sich mit diesen Tinten nicht bedrucken.

Die UV härtenden Tinten werden in grossen und teueren Anlagen eingesetzt. Die Haftung des Farbmittels derartiger Tinten erfüllt die hohen Anforderungen der Industrie nicht immer.

Aus der EP-B-0 936 080 ist ein Verfahren zum Dekorieren von Skiern, Snowboards, Skateboards Surfbrettern und dergleichen Gegenständen mit dekorativ gestalteter Oberfläche bekannt, bei dem ein flächiges Substrat in Form einer bedruckten thermoplastischen Kunststofffolie mit der zu dekorierenden Oberfläche des Gegenstandes verbunden ist. Zur Verbesserung der Haftung der Druckfarbe oder Tinte wird das flächige Substrat vor dem Bedrucken mit einer Bindeschicht, z.B. einer farbpigmentlosen Siebdruckfarbe, versehen. Anschliessend wird, beispielsweise im Tintenstrahldruckverfahren, ein farbiges Motiv auf die Bindeschicht gedruckt. Auf das farbige Motiv wird nachfolgend, üblicherweise im Siebdruckverfahren, eine Deckfarbe, z.B. Deckweiss, als Hintergrund aufgetragen. Zur Verbesserung der Haftung auf dem Motiv kann die Deckfarbe Bindemittel enthalten.

Der Einsatz wässriger Tinten zum Bedrucken unbeschichteter Substrate mittels Tintenstrahldrucktechnologie ist aus der DE-A-103 47 034 bekannt. Um die verhältnismässig lange Trocknungszeit der Tinten in einem erträglichen Rahmen zu halten, ist die Verwendung der Tinte in Tintenstrahldrucksystem mit mindestens einer Heizvorrichtung in Form einer Heizplatte und/oder einer Infrarotheizung vorgesehen. Hierbei ist die Heizplatte direkt unterhalb, vor und/oder nach dem Druckkopf angeordnet, so dass sich die Heizplatte über die gesamte Bahn, die der Druckkopf zurücklegt, erstreckt. Alternativ oder zusätzlich ist ein oberhalb der zu bedruckenden Oberfläche angeordneter Infrarotstrahler als Heizvorrichtung vorgesehen. Ein wesentlicher Nachteil dieses Drucksystems liegt, dass es nur zum Bedrucken thermisch stabiler Substrate geeignet ist.

Zum Trocknen der vorwiegend mit Solvent-, ECO-Solventtinten erzeugten Druckbilder sind Drucker mit im Wesentlichen plattenförmig ausgebildeten Heizvorrichtungen bekannt. Das zu bedruckende Substrat gleitet über die Heizvorrichtungen und wird dabei angewärmt. Nach dem Druckvorgang ist örtlich und zeitlich eine weitere Heizzone nachgeschaltet, die die verdruckte Tinte vollständig trocknet. Nachteilig bei derartig aufgebauten Druckern ist, dass nur Tinten mit leicht bis mittel flüchtiger flüssiger Trägersubstanz eingesetzt werden können.

Die US-A-4 340 893 offenbart einen Tintenstrahldrucker mit einer Tintentrocknungsvorrichtung mit beidseits des Druckkopfs angeordneten Luftschlitzen zur Beaufschlagung des zu bedruckenden Substrats unmittelbar nach dem Bedrucken mit einem gegebenenfalls erwärmten Luftstrom.

Eine Tinte der eingangs genannten Art ist aus EP-A-1 522 561 bekannt.

### Darstellung der Erfindung

Der Erfindung liegt die Aufgabe zugrunde, eine wässrige Tinte der eingangs genannten Art für das direkte Bedrucken von nicht saugfähigen, thermisch empfindlichen Substraten zu schaffen. Die Tinte soll nach dem Druck schnell trocknen und eine sehr gute Haftung, Wasserbeständigkeit sowie eine genügend gute Alkalibeständigkeit aufweisen, so dass das Druckbild der industriellen Weiterverarbeitung standhält und insbesondere das Auftragen von sowie Verkleben und Verpressen mit alkalischen Substanzen problemlos ermöglicht.

Ein weiteres Ziel der Erfindung ist die Entwicklung eines einfachen und kostengünstigen Drucksystems, das zusammen mit der erfindungsgemässen Tinte die Erzeugung qualitativ hoch stehender Druckbilder ermöglicht und mit guter Schreibzuverlässigkeit funktioniert.

Ein anderes Ziel der Erfindung ist Entwicklung einer Tinte, mit der auf einfache und kostengünstige Weise ein zum Dekorieren von Skiern, Snowboards, Skateboards Surfbrettern und dergleichen Gegenständen mit dekorativ gestalteter Oberfläche geeignetes flächiges Substrat, z.B. eine thermoplastische Kunststofffolie, mit guter Haftung der Tinte auf dem Substrat bedruckt werden kann.

Zur erfindungsgemässen Lösung der Aufgabe führt eine Tinte mit den Merkmalen des Anspruchs 1.

Der wesentliche Kern der erfindungsgemässen Tinte liegt in der im Vergleich zu herkömmlichen wässrigen Tinten verminderten Verdunstungszahl der Feuchthaltemittel, die die Anwendung eines milderen Trocknungsverfahrens beim Bedrucken ermöglicht.

Die Kombination der erfindungsgemässen Tinte mit dem an sich bekannten Trocknungsverfahren durch Anblasen des zu bedruckenden Substrats unmittelbar während der Bedruckung in einem Luftstrom ermöglicht ein wirtschaftliches Bedrucken thermisch empfindlicher Substrate.

Vorteilhafte Weiterbildungen der erfindungsgemässen Tinte sind Gegenstand von abhängigen Ansprüchen.

Das polymere Bindemittel in der flüssigen Trägersubstanz liegt in einer wässrigen Dispersion vor und enthält mindestens eine wässrige aliphatische Polyesterurethan Dispersion.

Das Hilfsmittel für die Vernetzung des Bindemittels ist eine wässrige Lösung von Hexamethoxymethyl melamin. Die Tinte weist einen pH-Wert von grösser als 8 auf und das pH-Einstellmittel ist eine Ammoniaklösung.

Die Verwendung einer Polyesterurethan Dispersion als Binde-mittel mit Hexamethoxymethylmelamin als Vernetzungshilfsmittel ergibt zusammen mit der als pH-Einstellmittel gewählten Ammoniaklösung eine Tinte mit sehr guter Schreibzuverlässigkeit im Drucker, guter Haftung und ausreichender Alkalistabilität beim Bedrucken von oder Verkleben mit alkalischen Substanzen wie z.B. Deckweiss.

Ein wenigsten zwei Tinten umfassender Tintensatzt kann zusätzlich durch eine farblose Tinte ergänzt sein. Die farblose Tinte enthält eine flüssige, aus Wasser und wenigstens einem wassermischbaren Feuchthaltemittel mit einer Verdunstungszahl grösser als 10000 zusammengesetzte Trägersubstanz sowie wahlweise als weitere Zusatzstoffe ein Netzmittel und ein pH-Einstellmittel. Die farblose Tinte weist bevorzugt eine Oberflächenspannung kleiner als 30 mN/m und einen pH-Wert grösser als 9.5 auf. Mit der farblosen Tinte wird nach jedem Druckvorgang mittels eines Wischers der Druckkopf gereinigt. Die hohe Verdunstungszahl des Feuchthaltemittels verhindert ein Eintrocknen von Tinte auf dem Druckkopf zwischen zwei Druckvorgängen.

Ein bevorzugter Tintensatz umfasst Tinten der Farben cyan, magenta, gelb und schwarz und/oder helles cyan, helles magenta, rot und blau.

Ein zum direkten Bedrucken eines Substrats mit nicht saugfähiger Oberfläche besonders geeignetes Verfahren zeichnet sich dadurch aus, dass die erfindungsgemässe Tinte mittels Tintenstrahldrucktechnologie aus wenigstens einem einer Druckbahn folgenden Druckkopf auf die Substratoberfläche aufgetragen und die Verdunstung der flüssigen Trägersubstanz der Tinte während des Druckvorgangs durch Luftzirkulation beschleunigt wird, wobei zweckmässigerweise wenigstens ein Ventilator entlang der Druckbahn des Druckkopfs angeordnet ist. Mit den Ventilatoren wird ein auf die Substratoberfläche gerichteter, auf eine Temperatur von 30 bis 60°C erwärmter Luftstrom erzeugt. Bevorzugt wird der Luftstrom ausschliesslich während des Bedruckens erwärmt.

Die kombinierte Anwendung der Tinte und des Verfahrens gemäss vorliegender Erfindung führt u. a. zu einem vereinfachten Verfahren zur Herstellung einer bedruckten thermoplastischen Kunststofffolie mit guter Farbhaftung zum Dekorieren von Skiern, Snowboards, Skateboards Surfbrettern und dergleichen Gegenständen mit dekorativ gestalteter Oberfläche.

### Beschreibung der Erfindung mit Ausführungsbeispielen

Die Druckqualität wird massgeblich von den folgenden Faktoren bestimmt:
1. Druckkopfaufbau (Auflösung und Tropfengrösse)
2. Tinte (physikalische Eigenschaften, Zusammensetzung, Art des Farbmittels und des Binders)
3. Substrat (Oberflächenbeschaffenheit, Oberflächenenergie, Material)
4. Software (Druckertreiber)
5. Umweltbedingungen beim Drucken (Ventilator mit Warmluft während des Bedruckens)

Das direkte Bedrucken von nicht saugfähigen Oberflächen wurde durch die Fortschritte bei der Druckkopftechnologie in den letzten Jahren in folgender Hinsicht erleichtert:
- Die Druckauflösung wurde erhöht
- Die Tropfengrösse wurde auf wenige Pikoliter reduziert
- Erzeugung von variablen Tropfengrössen

Die in der Tintenstrahldrucktechnologie verwendeten Farben auf Wasserbasis sind in der Regel dünnflüssige Tinten mit einer Viskosität von 1-20 mPas. Sie enthalten neben der wesentlichen Komponente Wasser üblicherweise ein Gemisch aus verschiedenen organischen Lösungsmitteln zur Steuerung der Trocknungszeit sowie der Penetration der Tinte in porösen Substraten. Der Einsatz schwer flüchtiger Lösungsmittel verhindert das Eintrocknen der Tinte in den Düsen.

Die Farbmittel, die üblicherweise 2-6 Gew.-% der Tinte entsprechen, sind lösliche Farbstoffe oder unlösliche Pigmente einer Teilchengrösse unter 1 µm. Die Lichtbeständigkeit von mit pigmentierten Tinten gedruckten Druckbildern ist den mit Farbstofftinten gedruckten Bildern überlegen. Die erfindungsgemässe Tinte enthält deshalb bevorzugt lichtbeständige Pigmentdispersionen. Da die Düsen des Druckkopfes eine Düsenöffnung von etwa 10-20 µm aufweisen, ist es sehr wichtig, dass die Pigmentdispersionen bzw. die physikalischen Eigenschaften der Tinten während des ganzen Druckprozesses stabil bleiben. Bei herkömmlichen Herstellungsverfahren der Pigmentdispersionen werden die Pigmente gemahlen und unter Zugabe von Polymeren und Tensiden, wie Dispergiermittel, stabilisiert.

Die Pigmentpräparationen haben in der Regel zu tiefe Oberflächenspannung und zu hohe Viskosität, was Einschränkungen in der Formulierung der Tinte zur Folge hat. Eine neue Art der Pigmentstabilisierung wird durch eine Oberflächenmodifikation der Pigmenteilchen erreicht, bei der Sulfon- oder Carboxyl- Gruppen an der Oberfläche der Pigmentteilchen chemisch gebunden sind. Diese Pigmentpräparate werden auch als selbst dispergierend bezeichnet.

Die Pigmentpartikel werden durch Zusatz von polymeren Bindemitteln an der Substratoberfläche gebunden. Bei Auswahl des geeigneten Bindemittels, das in der Regel 3-6 Gew.-% der Tinte entspricht, ist neben der Funktion auch dessen Einfluss auf die Tinteneigenschaften zu berücksichtigen.

Die Tinte enthält weitere Additive, wie pH-Einstellmittel und Konservierungsmittel, die insbesondere für die Erhaltung der Lagerstabilität der Tinte erforderlich sind.

Ein weiteres wichtiges Additiv ist ein oberflächenaktives Mittel oder ein Gemisch von oberflächenaktiven Mitteln, das für die Benetzung des zu bedruckenden Substrats, d.h. für das Spreiten der Tinte auf der nicht saugfähigen Oberfläche sowie für die Penetration der Tinte in die poröse Oberfläche verantwortlich ist.

Die Ausbreitungsgeschwindigkeit der Flüssigkeitsfront auf nicht saugfähigen Oberflächen ist vorwiegend von der Viskosität der Flüssigkeit abhängig. Durch die Benetzung des Bedruckstoffes wird die Kantenschärfe von Linien, die Homogenität von Vollflächen, das Ineinanderfliessen der Farben sowie die Haftung der Farbe beeinflusst.

Ob eine Flüssigkeit einen Festkörper benetzt oder nicht, hängt sowohl von der Flüssigkeit als auch von dem Material des Festkörpers ab. Die YOUNG'sche Gleichung beschreibt das Benetzungsvermögen fester Körper, die Abhängigkeit des Benetzungswinkels (Kontaktwinkel) von den Oberflächenenergien der drei beteiligten Oberflächen (Oberflächenenergie des zu bedruckenden Substrats, Grenzflächenenergie Substrat-Tinte, Oberflächenenergie der Tinte). Das Substrat mit der nicht saugfähigen Oberfläche soll, wie dies auch bei allen herkömmlichen Druckmethoden verlangt wird, frei sein von Verunreinigungen und elektrostatischer Aufladung und eine möglichst hohe Oberflächenenergie besitzen.

Mit Hilfe von Software kann die in einem Arbeitsschritt zu druckende optimale Tintenmenge eingestellt werden. Dabei wird zwischen Druckqualität und Druckgeschwindigkeit ein Kompromiss gesucht.

Da die Ausbreitungsgeschwindigkeit der Tinte auf der nicht saugfähigen Oberfläche neben den Oberflächenenergien der Festkörper und der Tinte auch von der Viskosität der Tinte abhängig ist, werden die Umweltbedingungen so eingestellt, dass die flüssige Trägersubstanz der Tinte in möglichst kurzer Zeit verdunstet und damit die Viskosität der Tinte rasch erhöht wird, um das Ineinanderfliessen der Tropfen zu verhindern. Abgesehen von der Verdunstungszahl der eingesetzten flüssigen Trägersubstanzen, ist die Verdunstungsgeschwindigkeit abhängig von der Umgebungstemperatur, von der Luftzirkulation und von der Schichtdicke (Tropfengrösse). Im Zusammenhang mit der erfindungsgemässen Tinte wird bevorzugt ein Druckverfahren eingesetzt, bei dem die Verdunstung vor allem durch die Luftzirkulation und weniger durch die Umgebungstemperatur beschleunigt wird. Mit diesem Verfahren wird die Trocknung der Tinte auch für thermisch empfindliche Substrate ermöglicht.

Die Verdunstung der Trägersubstanz durch Luftzirkulation ist bei Einsatz eines polymeren Binders vorteilhaft, da die Trägersubstanz bei erhöhter Temperatur zur Hautbildung neigt und dadurch eine Lösungsmittelretention verursachen kann, die zu einer Verschlechterung der Aushärtung und ungenügender Haftung führt. Erst nach kompletter Verdunstung der flüssigen Trägersubstanz kann die Farbe auf dem Substrat aushärten und eine gute Haftung und Alkalibeständigkeit ergeben.

Bei der erfindungsgemässen Tinte wird der Verdunstungszahl der flüssigen Trägersubstanz in der Tinte aus zwei Gründen besonders grosse Aufmerksamkeit geschenkt:
1. Durch den Einsatz von schwer flüchtigen Lösungsmitteln wird das Eintrocknen der Tinte in den Düsen verhindert, was das Anschreiben und die Schreibzuverlässigkeit im Drucker positiv beeinflusst.
2. Durch den Einsatz von leicht flüchtigen Lösungsmitteln soll die Trocknung begünstigt werden.

Die Verdunstungszahl gibt an, wievielmal langsamer eine Flüssigkeit verdunstet als Diethylether (Verdunstungszahl 1). Die Schwierigkeit im Auffinden eines Kompromisses liegt darin, dass viele Lösungsmittel, die üblicherweise in den Tinten eingesetzt werden, nicht mit den Pigmentdispersionen verträglich sind und dadurch die Lagerstabilität der Tinten beeinträchtigen. Ein Beispiel hierfür sind niedrige Alkohole, insbesondere mit 1-4 Kohlenstoffatomen.

Die Vorteilhaftigkeit der erfindungsgemässen Tinte ergibt sich aus der nachfolgenden Beschreibung beispielhafter erfindungsgemässer Tintenformulierungen und der Gegenüberstellung von Vergleichsbeispielen.

### Bereiche der Tintenzusammensetzungen

| **Gew.-%** | **Komponente** | **Typisches Produkt** | **Bemerkung** |
|---|---|---|---|
| 20-90 | Wasser | | entmineralisiert |
| 0.05-0.5 | Konservierungsmittel | Thiazol- und Isothiazolverbindungen | |
| 10-30 | Feuchthaltemittel | Glykole, Glycerin, Harnstoff und/oder Harnstoffderivate | |
| 0.1-10 | pH-Einstellmittel | Basische Amine, Puffer | |
| 0.01-5 | Tenside | Fluor-, Silikontenside, Fettalkoholpolyglykolether | |
| 0.5-5 | Hilfsmittel für die Vernetzung | | Abgestimmt mit dem Binder |
| 1-6 fest) | Farbmittel | Dispersionen der Pigmente Für Gelb C.I. P.Y.13, 74, 150, 155 Für Magenta C.I. P.R. 122, 184 P.V. 19 Für Cyan C.I. P.Blue 15:3, 15:4 Für Schwarz C.I. P.Black 7 | Wässrige Dispersion mit 10-25% Festanteil |
| 0.5- 20 | Bindemittel | Polyacrylate, Polyesterurethan | w. Dispersion |
| 0-2 | Weitere Additive | EDTA | |

Die Rohstoffe werden bei der Herstellung der Tinte in der oben angegebenen Reihenfolge zusammengegeben und gerührt. Danach wird die Tinte filtriert und ist unmittelbar einsatzbereit.

Die Tinte wird während des Bedruckens der nicht saugfähigen Oberfläche mit Hilfe eines oder mehrerer Ventilatoren getrocknet, so dass die bedruckten Substrate anschliessend stapelbar sind. Für die vollständige Aushärtung des Binders wird je nach eingesetzter Verbindung eine thermische Nachbehandlung durchgeführt.

### Beispiel 1

| **Gew.-%** | **Komponente** | **Produkt** | **Verdunstungszahl** |
|---|---|---|---|
| | Wasser | | 80 |
| 0.1 | Konservierungsmittel | Preventol | |
| 20 | Feuchthaltemittel 1 | Ethylenglykol | 2625 |
| 5 | Feuchthaltemittel 2 | Butyldiglykol | >1200 |
| 0.6 | pH-Einstellmittel | Ammoniaklösung 2.5% | |
| 0.15 | Tensid 1 | Surfynol 440 | |
| 0.1 | Tensid 2 | Surfynol 104 | |
| 50 | Farbmittel | Pigmentdispersion div. Produkte | |
| 15 | Bindemittel | Polyesterurethan, w. Dispersion | |

### Beispiel 2

| **Gew.-%** | **Komponente** | **Produkt** | **Verdunstungszahl** |
|---|---|---|---|
| | Wasser | | 80 |
| 0.1 | Konservierungsmittel | Preventol | |
| 15 | Feuchthaltemittel 1 | Ethylenglykol | 2625 |
| 5 | Feuchthaltemittel 2 | Dipropylenglykol-monomethylether | 400 |
| 0.6 | pH-Einstellmittel | Ammoniaklösung 2.5% | |
| 0.15 | Tensid 1 | Surfynol 440 | |
| 0.1 | Tensid 2 | Surfynol 104 | |
| 1 | Hilfsmittel | Hexamethoxymethylmelamin w. Lösung | |
| 50 | Farbmittel | Pigmentdispersion | |
| 15 | Bindemittel | Polyesterurethan wässrige Dispersion | |

Die Tinten in den Beispielen 1 und 2 ergeben eine gute Bildqualität, sehr gute Schreibzuverlässigkeit im Drucker, eine gute Haftung sowie ausreichende Alkalistabilität für das Bedrucken von oder Verkleben mit alkalischen Substanzen wie z.B. Deckweiss.

### Vergleichsbeispiel 1

| **Gew.-%** | **Komponente** | **Produkt** | **Verdunstungszahl** |
|---|---|---|---|
| | Wasser | | 80 |
| 0.1 | Konservierungsmittel | Preventol | |
| 10 | Feuchthaltemittel 1 | Ethylenglykol | 2625 |
| 10 | Feuchthaltemittel 2 | Diethylenglykol | >10000 |
| 5 | Feuchthaltemittel 3 | Dipropylenglykol-monomethylether | 400 |
| 0.6 | pH-Einstellmittel | Ammoniaklösung 2.5% | |
| 0.15 | Tensid 1 | Surfynol 440 | |
| 0.1 | Tensid 2 | Surfynol 104 | |
| 1 | Hilfsmittel | Hexamethoxymethylmelamin w. Lösung | |
| 50 | Farbmittel | Pigmentdispersion | |
| 15 | Bindemittel | Polyesterurethan w. Dispersion | |

Die Tinte im Vergleichsbeispiel 1 trocknet während des Bedruckens zu langsam. Die verschiedenen Farbtropfen fliessen zusammen und führen zu einer ungenügenden Bildqualität bezüglich Auflösung und Kantenschärfe. Die Haftung der Tinte ist relativ gut und die Alkalibeständigkeit ist zufrieden stellend.

### Vergleichsbeispiel 2

| **Gew.-%** | **Komponente** | **Produkt** | **Verdunstungszahl** |
|---|---|---|---|
| | Wasser | | 80 |
| 0.1 | Konservierungsmittel | Preventol | |
| 7 | Feuchthaltemittel 1 | Ethylenglykol | 2625 |
| 15 | Feuchthaltemittel 2 | Diethylenglykol | >10000 |
| 0.6 | pH-Einstellmittel | Ammoniaklösung 2.5% | |
| 0.15 | Tensid 1 | Surfynol 440 | |
| 0.1 | Tensid 2 | Surfynol 104 | |
| 1 | Hilfsmittel | Hexamethoxymethylmelamin w. Lösung | |
| 50 | Farbmittel | Pigmentdispersion | |
| 15 | Bindemittel | Polyesterurethan wässrige Dispersion | |

Die Tinte im Vergleichsbeispiel 2 ergibt eine schlechte Bildqualität und eine ungenügende Haftung.

### Vergleichsbeispiel 3

| **Gew.-%** | **Komponente** | **Produkt** | **Verdunstungszahl** |
|---|---|---|---|
| | Wasser | | 80 |
| 0.1 | Konservierungsmittel | Preventol | |
| 20 | Feuchthaltemittel 1 | Ethylenglykol | 2625 |
| 5 | Feuchthaltemittel 2 | Butyldiglykol | >1200 |
| 0.6 | pH-Einstellmittel | Triethanolamin | |
| 0.15 | Tensid 1 | Surfynol 440 | |
| 0.1 | Tensid 2 | Surfynol 104 | |
| 50 | Farbmittel | Pigmentdispersion | |
| 10 | Bindemittel | Styrolacrylat w. Dispersion | |

Die Tinte im Vergleichsbeispiel 3 ergibt eine einwandfreie Bildqualität, jedoch sind die Alkalibeständigkeit des Druckbildes und die Haftung nach dem Bedrucken mit Deckweiss ungenügend.

## Patentansprüche

1. Tinte zum Bedrucken von Substraten mit nicht saugfähiger Oberfläche mittels Tintenstrahldrucktechnologie, enthaltend eine flüssige, aus Wasser und wenigstens einem wassermischbaren Feuchthaltemittel zusammengesetzte Trägersubstanz, wasserunlösliche Farbmittel, polymere Bindemittel sowie als weitere Zusatzstoffe ein Hilfsmittel für die Vernetzung des Bindemittels und ein pH-Einstellmittel,
**dadurch gekennzeichnet, dass**
das wassermischbare Feuchthaltemittel eine Verdunstungszahl von 100 bis 3000 aufweist, das polymere Bindemittel mindestens eine wässrige aliphatische Polyester-Polyurethan Dispersion enthält und in der flüssigen Trägersubstanz in einer wässrigen Dispersion vorliegt, das Hilfsmittel für die Vernetzung des Bindemittels eine wässrige Lösung von Hexamethoxymethylmelamin ist, die Tinte einen pH-Wert von grösser als 8 aufweist und das pH-Einstellmittel eine Ammoniaklösung ist.

2. Tintensatz, umfassend wenigstens zwei Tinten nach Anspruch 1 sowie wahlweise zusätzlich eine farblose Tinte, enthaltend eine flüssige, aus Wasser und wenigstens einem wassermischbaren Feuchthaltemittel mit einer Verdunstungszahl grösser als 10000 zusammengesetzte Trägersubstanz, sowie wahlweise als weitere Zusatzstoffe ein Netzmittel und ein pH-Einstellmittel.

3. Tintensatz nach Anspruch 2, **dadurch gekennzeichnet, dass** die farblose Tinte eine Oberflächenspannung kleiner als 30 mN/m aufweist.

4. Tintensatz nach Anspruch 2, **dadurch gekennzeichnet, dass** die farblose Tinte einen pH-Wert grösser als 9.5 aufweist.

5. Tintensatz nach Anspruch 2, **gekennzeichnet durch** Tinten der Farben cyan, magenta, gelb und schwarz und/oder helles cyan, helles magenta, rot und blau.

## Claims

1. Ink for printing on substrates having a nonabsorptive surface by means of inkjet printing technology, containing a liquid carrier substance, composed of water and at least one water-miscible humectant, water-insoluble colorants, polymeric binders and, as further additives, an auxiliary for the crosslinking of the binder and a pH adjusting agent,
**characterized in that**
the water-miscible humectant has an evaporation number of 100 to 3000, the polymeric binder contains at least one aqueous aliphatic polyester-polyurethane dispersion and is present in the liquid carrier substance in an aqueous dispersion, the auxiliary for the crosslinking of the binder is an aqueous solution of hexamethoxymethylmelamine, the ink has a pH greater than 8 and the pH adjusting agent is an ammonia solution.

2. Ink set, comprising at least two inks according to Claim 1 and optionally in addition a colourless ink containing a liquid carrier substance, composed of water and at least one water-miscible humectant having an evaporation number of greater than 10 000, and optionally, as further additives, a wetting agent and a pH adjusting agent.

3. Ink set according to Claim 2, **characterized in that** the colourless ink has a surface tension of less than 30 mN/m.

4. Ink set according to Claim 2, **characterized in that** the colourless ink has a pH greater than 9.5.

5. Ink set according to Claim 2, **characterized by** inks of the colours cyan, magenta, yellow and black and/or light cyan, light magenta, red and blue.

## Revendications

1. Encre pour l'impression de substrats avec une surface non absorbante au moyen d'une technologie d'impression à jet d'encre, contenant une substance support liquide, constituée d'eau et d'au moins un humectant miscible à l'eau, une matière colorante insoluble dans l'eau, un liant polymère ainsi que, comme d'autres additifs, un adjuvant pour la réticulation du liant et un agent de réglage du pH, **caractérisée en ce que** l'humectant miscible à l'eau présente un indice d'évaporation de 100 à 3000, le liant polymère contient au moins une dispersion aqueuse de polyester-polyuréthane aliphatique et se trouve dans la substance support liquide dans une dispersion aqueuse, l'adjuvant pour la réticulation du liant est une solution aqueuse d'hexaméthoxyméthylmélamine, l'encre présente un pH supérieur à 8 et l'agent de réglage du pH est une solution d'ammoniaque.

2. Composition d'encre, comprenant au moins deux encres selon la revendication 1 ainsi qu'au choix en outre une encre incolore, contenant une substance support liquide constituée par de l'eau et au moins un humectant miscible à l'eau présentant un indice d'évaporation supérieur à 10 000 ainsi qu'au choix, comme autres additifs, un mouillant et un agent de réglage du pH.

3. Composition d'encre selon la revendication 2, **caractérisée en ce que** l'encre incolore présente une tension superficielle inférieure à 30 mN/m.

4. Composition d'encre selon la revendication 2, **caractérisée en ce que** l'encre incolore présente un pH supérieur à 9,5.

5. Composition d'encre selon la revendication 2, **caractérisée par** les encres de couleur cyan, magenta, jaune et noir et/ou cyan clair, magenta clair, rouge et bleu.
